# EUROPEAN PATENT SPECIFICATION

(11) **EP 0 259 705 B1**
(45) Date of publication and mention of the grant of the patent: **28.09.1994**
(21) Application number: 87112428.5
(22) Date of filing: 26.08.1987
(51) Int. Cl.: G06F 15/60

(54) **Process for incorporating timing parameters in the synthesis of logic circuit design**
Verfahren zur Aufnahme von Zeitparametern in der Synthesis von logischen Schaltungsentwürfen
Procédé d'incorporation de paramètres temporels dans la synthèse de la conception de circuit logique

(30) Priority: 12.09.1986 US 907514
(43) Date of publication of application: 16.03.1988
(73) Proprietor: DIGITAL EQUIPMENT CORPORATION, Maynard, MA 01754 (US)
(72) Inventor: Hooper, Donald F., Northboro Massachusetts 01532 (US)
(74) Representative: Grünecker, Kinkeldey, Stockmair & Schwanhäusser Anwaltssozietät

(56) References cited:
- US-A- 4 263 651
- IBM JOURNAL OF RESEARCH AND DEVELOPMENT, vol. 26, no. 1, January 1982, pages100-105, Armonk, New York, US; R.B. HITCHCOCK, Sr. et al.: "Timing analysis ofcomputer hardware"
- IBM TECHNICAL DISCLOSURE BULLETIN, vol. 27, no. 10A, March 1985, pages 5499-5500, New York, US; "Analysis of logic path timing"
- FUJITSU-SCIENTIFIC AND TECHNICAL JOURNAL, vol. 18, no. 3, September 1982, pages437-451, Kawasaky, JP; T. SAITO et al.: "A CAD system for logic design based onframes and demons"
- IEEE 20TH DESIGN AUTOMATION CONFERENCE 1983, paper 27.3, pages 411-418; N.P.JOUPPI: "Timing analysis for nMOS VLSI"

## Description

This invention relates generally to the automated synthesis of logic circuits and more particularly to the inclusion in the logic circuit synthesis of criteria relating to the timing delays in the circuit, delays that can impact the performance of the synthesized circuits.

### Description of the related art

At the frequency at which the modern logic circuits, and particularly data processing systems, have been designed to operate, the importance of many properties of the circuit, that could previously be ignored, have become important. One such property are the timing delays found for the components of the logic circuit. An essential element in the operation of a circuit can be the simultaneous presence of a plurality of signals at a predetermined location in the data processing system. Because the signals typically pass through circuit components and travel a finite distance along the conducting leads, the required simultaneity of the signals may not exist.

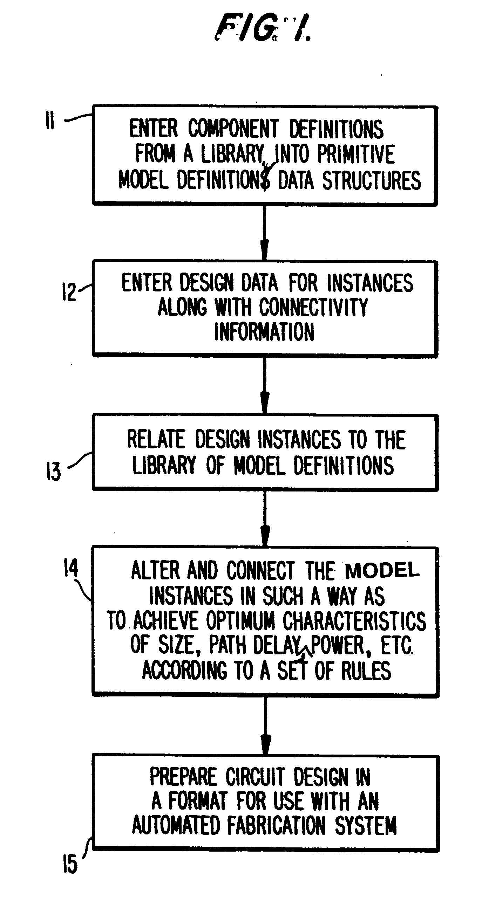

Referring next to Fig. 1, the procedure for synthesizing a logic circuit design according to the prior art is shown. Model definition data structures from a library of component definitions is entered into the data structures associated with the synthesis data base in step 11. In step 12, the information related to the instances of the circuit design including the connectivity information is entered in the data base. The instances of the circuit design are generally in a behavorial or functional form when entered in the synthesis data base. The synthesis procedure relates the instances of the circuit design to the model instances in step 13. In step 14, a set of rules for the synthesis procedure is applied to each of the model instances and the model instances are altered and connected in such a way as to maximize certain parameter such as size, path delay, power, etc. In step 15, the resulting circuit design is placed in a format that can control the automated fabrication of the circuit.

The foregoing procedure suffers from the lack flexibility, particularly with respect to timing parameters. Typically, a model instance or component will find a single definition in the model definition library. Associated with each model definition is a timing delay that will be found in the resulting synthesized circuit. Even when a plurality of possible model instances are available to replace the original model instance, the automatic synthesis procedure typically does not have the capability to select a component based on the timing delays. In fact, the capability is not present to determine conveniently that a timing problem is present. Furthermore, the critical paths in which the timing delays are providing the most serious problems can not be automatically identified.

From IBM Journal of Research and Development, Vol. 26, No. 1, Jan 1982, pages 100-105, Armonk, N.Y.; U.S.; R.B. Hitchcock, Sr. et al a block-orientated algorithm for time analysis of computer hardware is known. The outpout of the timing analysis includes slack at each block to provide a measure of the severity of any timing problem.

IEEE 20TH DESIGN AUTOMATION CONFERENCE 1983, paper 27.3, pages 411-418; N.P. JOUPPI: "Timing analysis for nMOS VLSI" indicates that "gate delays" and "wire delays" may be considered separately.

It is an objet of the present invention to provide an improved method for automatic design of logic circuits.

This object is solved by the subject matter of claim 1.

### BRIEF DESCRIPTION OF THE DRAWINGS

Figure 1 is a block diagram of the method for synthesizing a circuit according to the related art.

Figure 2 is a block diagram showing the method for synthesizing a logic circuit design capable of utilizing the present invention.

Figure 3A is a generalized block diagram of a circuit illustrating the calculation of the parameters of the present invention.

Figure 3B illustrates the definitions of quantities associated with selected locations of the circuit being synthesized.

Figure 4 is a block diagram illustrating the application of the present invention to a circuit including latch circuit elements activated by clock signals.

Figure 5 is a flow chart describing the computation of parameters associated with selected locations in the circuit and the application of these parameters.

Figure 6 illustrates the possible timing parameters associated with a port instances of a circuit design according to the present invention.

### DESCRIPTION OF THE PREFERRED EMBODIMENT

### 1. Detailed Description of the Figures

Fig. 1 has previously been described in relation to the related art.

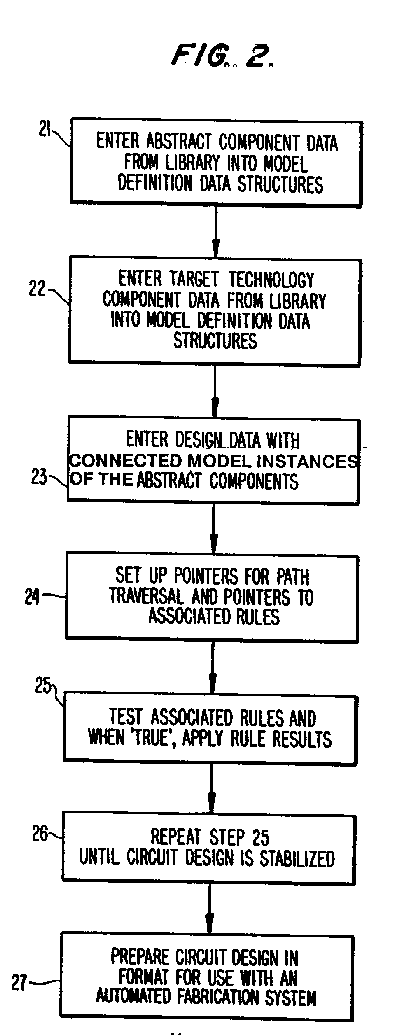

Referring next to Fig. 2, the synthesis procedure of the present invention is shown. In step 21, abstract component data from a library of such data is entered into model definition data structures of the synthesis procedure. In step 22, component data relating to the target technology from the library is entered into model definition data structures of the synthesis procedure. The circuit design data with the connected model instances described in terms of abstract components is entered into the synthesis procedure in step 23. In step 24, the synthesis procedure provides two sets of pointers. The first set of pointers permits the synthesis procedure to follow any arbitrary path through the design circuit. The second set of pointers couples rules with associated data base structures. In step 25, the associated rules are tested for each instance and when the test provides a 'true' result, the consequences of the rule is implemented. In the preferred embodiment, each rule has an antecedent portion and a consequence portion. The antecedent portion includes a test algorithm, and the consequence portion provides the information required to implement a result of the test. Because the rules are applied to instances in a sequential manner, and because in the preferred embodiment the test procedures can involve neighboring instances that were changed as a result of a test applied to that instance, the process is repeated until the circuit design has stabilized. In step 27, the final version of the circuit design is placed in a format suitable for use in an automated circuit fabrication system.

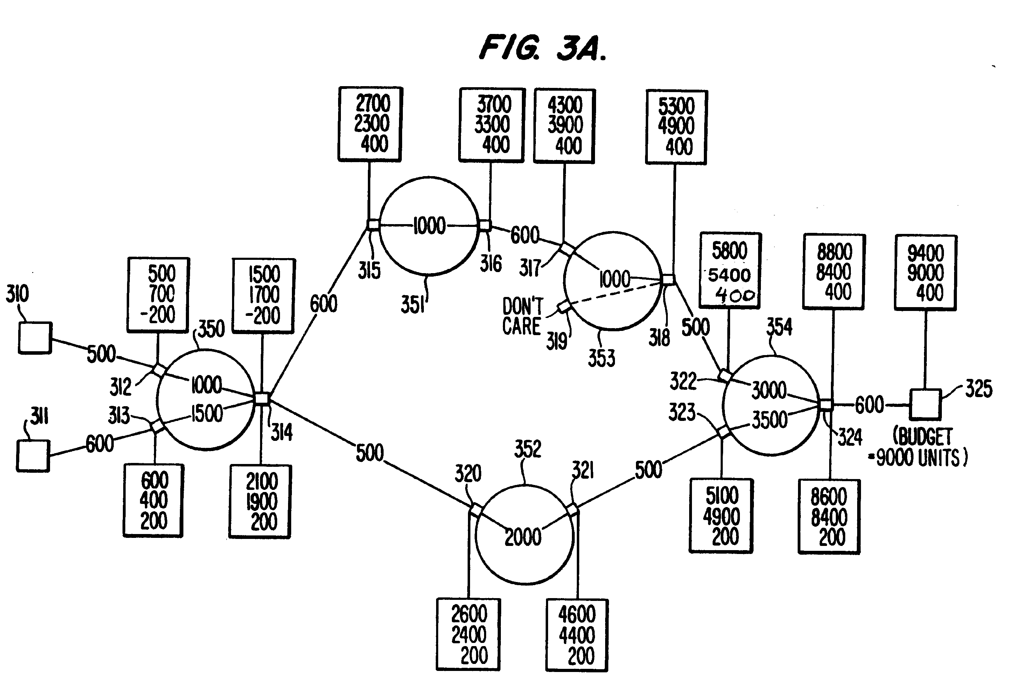

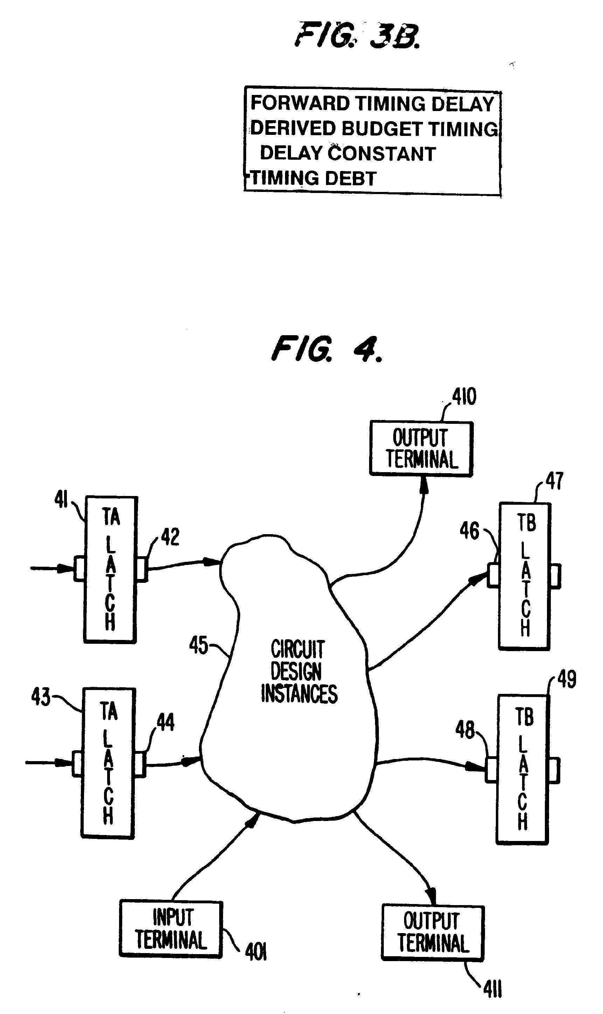

Referring next to Fig. 3, the technique for establishing a criterion for use in synthesizing the designed circuit is shown. A group of group of model instances 350 - 354 are being used as the basis for synthesizing the circuit. Associated with each model instance is at least one input terminal and at least one output terminal. For example, model instance 350 has input terminals 312 and 313 and an output terminal 314. In addition, the files of the program associated with each model instance has stored therein data related to the delay of the elements and this information is displayed in Fig. 3. Referring to Fig. 3, the data files associated with model instance 350 has a 1000 unit delay between input terminal 312 and output terminal 314, while model instance 350 has a delay of 1500 units between input terminal 313 and output terminal 314. In addition, the delay between terminals, where important, is also stored in the appropriate files and is illustrated in Fig. 3 by a number between terminals. As an example, the time delay between input terminal 310 and terminal 312 of model instance 350 is 500 units In Fig. 3, each terminal has associated therewith a group of three numbers, the interpretation of which is illustrated in Fig. 3B. The first number is the total time delay from the input terminal. By way of illustration, beginning at input terminal 310, the media delay is 500 units. Therefore, the first number in the group of numbers associated with terminal 314 is 500. A signal is next delayed by 1000 units by the model instance 350 between input terminal 312 and output terminal 314. Therefore, the first number associated with the path between terminal 310 and terminal 314 is 1500, i.e. the sum of 500 units and 1000 units. Similarly, the forward time delay in the path from input terminal 311 to the output terminal 314 of model instance 350 is given by 2100 units, i.e., 600 units of media delay between terminal 311 and terminal 313 plus 1500 units of model instance delay between terminal 313 and terminal 314. For paths continuing beyond terminal 314, i.e the path from terminal 314 to terminal 315 and the path from terminal 314 to terminal 320, the longest delay is chosen to provide consistent results. The second number associated with each terminal in Fig. 3B is the derived budget timing delay constant. This reverse time delay is determined in the following manner. At an output terminal 325, a time budget is associated therewith. This time budget is the time delay permitted or preestablished by the circuit design. By way of example, the time delay budget for the circuit illustrated in Fig. 3A is 9000 units. Beginning with the delay time requirement for the output terminal(s), the time delays associated with the model instances and the media delays of the intervening paths are subtracted from the time delay budget or requirement to provide the derived budget timing delay constant or second number (of Fig. 3B) associated with each terminal. By way of further illustration at the output terminal 325, the second number or reverse time delay is 9000 units, the budget or required time delay. At terminal 324, the output terminal of the model instance 354, the derived budget timing delay constant is 8400 units, the difference between 9000 units at the output terminal and the 600 unit media time delay. Similarly, the derived budget delay constant at terminal 323 of model instance 354 is 4900 units, the difference between the derived timing delay constant of 8400 units at terminal 324 and the delay of 3500 units of the model instance 354 on this signal path. Associated with each terminal is a third quantity referred in Fig. 3B as the timing debt. This quantity is an indication of the actual delay versus the required delay and is determined by subtracting the forward time delay from the derived budget timing delay constant. For example, the timing debt at the output of model instance 352 is 200 units, i.e. 4600 units minus 4400 units. On the other hand, the timing debt a terminal 314 is 1500 units minus 1700 units or minus 200 units. The minus quantity indicates that, at that position of the path, the signal is being delayed by an amount that will not impact the delay of the signal in meeting the timing budget. With reference to model instance 353, an input terminal includes a signal that is not relevant to the timing delays of the circuit. This signal can generally be referred to as a "don't care" signal and is ignored by the program.

Referring next to Fig. 4, a generalized block diagram for a portion of the circuit that includes latch elements activated by clock signals is shown. The signals from one set of latches 41 and 43, activated by a clock signal TA, must be received by the latches 47 and 49 when the latches 47 and 49 are activated at a second clock signal TB. Typically the clock signal TB will have a predetermined delay as compared to clock signal TA, i.e., the TB equal TA + N. The signals must pass through the network to be synthesized, illustrated as portion 45. N, the difference between the clock signal TB and the clock signal TA, can serve the same function as the timing budget in the discussion related to Fig. 3A. Thus, the forward time delays can be computed from the output terminals 42 and 44 of latch elements 41 and 42 respectively to the input terminals 46 and 48 of latch element 47 and 49 respectively. Then, N = TB - TA can be used as figure of merit, being the difference between as the budget time delay at terminals 46 and 48 of the latches activated by the TB clock signal and the derived budget timing delay constant associated with the model instances of in the network portion 45. Having derived the forward timing delays of the network 45 as well as the derived budget timing delay constants of the network, the timing debt can be determined for each model instance and the timing debt can be used in determining the course of the synthesis procedure activity. The circuit instances in network 45 can have timing data associated with input terminals 401 and output terminals 410 and 411.

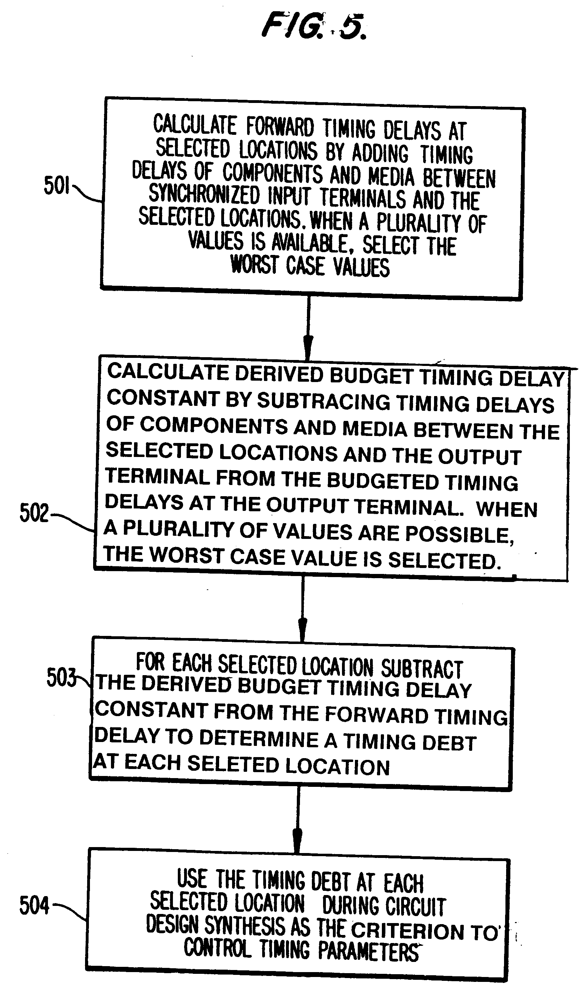

Referring to Fig. 5, the procedure for obtaining the timing debts and utilizing the timing debts in circuit synthesis is described. In step 51, the forward timing delays are calculated for a given location in the circuit by adding together the individual timing delays of model instances and media timing delays between an input terminal or synchronized input terminals and the given location. In the event that a plurality of values for the timing delays are available, the worst possible timing delay is associated with the given location as the forward timing delay. In step 52, the derived budget timing delay constant is calculated by taking the required or budget timing delay associated with an output terminal or output terminals and subtracting the timing delays of the model instances and media between the given location and the output terminal from the budget timing delay. Again, when a plurality of values are available, the worst possible value, from the perspective of performance, is selected. In step 53, the timing debt for each given location is determined by subtracting the forward timing delay from the derived budget timing delay constant. In step 54, the circuit is synthesized and model instances resulting from the synthesis have as a least one criterion, the effect of the synthesis on the timing debt a each given location. At the end of the synthesis, the timing debts are again calculated and the synthesis is repeated. This process is repeated until no change in the circuit design will result from the synthesis procedure. The timing delays at the output terminals can be compared with the budget timing delays to determine if the resulting circuit is acceptable.

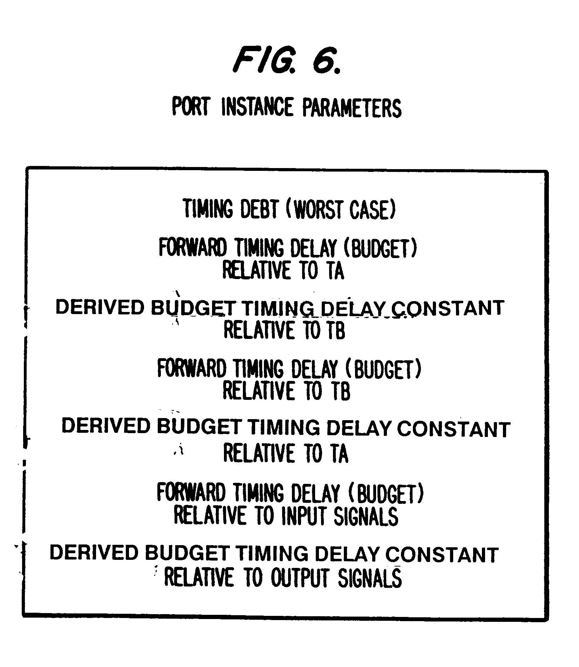

Referring next to Fig. 6, the timing parameters that can be associated with a port instance in the circuit design is illustrated. The example involves a latch type system having two system clock signals, TA and TB. The port instance can be associated with the input or output terminals of a component (or instance of the circuit design). The stored parameters include a forward timing delay relative to a path from a TA latch, a derived budget timing delay constant relative to the arrival of a signal along a reverse path direction relative to a TB latch, a forward timing delay relative to a signal originating at a TB latch, a derived budget timing delay constant relative to a signal arriving at a TA latch, a forward timing delay relative to an input terminal and a derived budget timing delay constant relative to output terminals. The timing debt is the worst case of the result of subtracting a derived budget timing delay constant from a forward timing delay.

### 2. Operation of the Preferred Embodiment

In the synthesis of logic circuits, the procedure that can utilize the present invention most advantageous can typically examine a plurality of circuit design criteria to determine which possible synthesis component, if any, is to replace the original component. In the preferred procedure, a plurality of components can acceptable as synthesis components and a priority procedure is imposed to determine which synthesis component, if any, is to replace the present component in the circuit. In this type of synthesis procedure, the timing debt at each location can be incorporated as an additional priority factor as the sole criterion for the selection of a replacement synthesis component. In particular, when the total delay from the input terminal(s) to the output terminal(s) is greater than the budget timing delay(s), then the priority for circuit synthesis can be imposed that, for any model instances or combination of model instances resulting from the synthesis, the timing budget be reduced when such a new synthesis model instance replaces an original model instance. The timing debt parameter also provides a convenient quantity for identifying where the major unacceptable delays are found.

Referring one again to the Fig. 3A, this simple example, discussed in detail above, can be generalized when the data files associated with each port instance can include an increased information as compared to Fig. 3B. In the preferred embodiment, the synthesis procedure can require knowledge of the forward delays at a particular output terminal relative to a plurality of input terminals. Similarly, the knowlege can be required to the derived budget timing delay constants at each input terminal relative to a plurality of output terminals. Furthermore, the derived budget and forward timing delays can be required for intermediate port instances. Therefore, according to one embodiment, a port instance can have a plurality of forward and reverse timing delays, each associated with a different path in the design circuit. Not only are the plurality of delays stored with each port instance, but the path designation must be associated with each path delay. One timing debt is stored with each selected location, however, a multiplicity of data groups shown in Fig. 3B, one of reach path, can be associated with the selected location.

When the circuits to be synthesized become large, the procedure herein described becomes progressively longer to execute as the multiplicity of possible paths increases. When the circuit to be synthesized has latches that are activated by clock signals, then the analysis can be performed form the clock signal driven latch element to clock signal driven latch element, the timing delay between the clock signals can be used in a manner as the budget timing delay for the latch receiving the delayed signal. Using the technique described above, the timing debt can be determined for each location and the timing debt can then be used as one of the criterion by which the synthesis is the logic circuit is controlled. Timing information with respect to input signal terminal and output signal terminals can be associated with each port instance. The parameters associated with each port instance in the situation illustrated by Fig. 4 are shown in Fig. 6. As with the multipath method, only one timing debt, the worst possible case, is associated with each port instance. Each possible port instance therefore has reduced number of timing parameters associated therewith as compared with the situation in which the timing delay parameters are associated with a multiplicity of paths intersecting the port instance. In this manner greatly expanded circuit designs can be analyzed with respect to timing delays.

In the synthesis programs, the ability to manipulate the timing delays of model instances (gates) has been found to become excessively slow when the number of model instances approaches 1000. In order to alleviate this problem, the technique illustrated in Fig. 4 can be used.

It will be clear to those skilled in the art that the present invention can work most advantageously with a synthesis system that permits the following of circuit paths in a forward or reverse direction relative to the signal flow direction and having the capability of storing potentially large data structures in association with appropriate (terminal and component port) locations. The existence of a process for following a signal path in the reverse direction permits the calculation of the reverse time delay without a complicated procedure.

## Claims

1. A method of incorporating timing information in a circuit synthesis procedure performed by a data processing system having a memory, the procedure using a circuit representation, stored in the memory, which includes a main input terminal (310), a main output terminal (325), and a plurality of interconnected circuit locations including a plurality of model instances (350-354), having at least one input terminal (312; 313: 315: 320: 322, 323; 317, 319) and at least one output terminal (314, 316, 321, 318, 324) associated therewith, and at least one model instance (350, 354) which has at least two input terminals (312, 313; 322, 323) and at least one output terminal (314, 324), wherein the timing information is stored in the memory and includes, for at least one input terminal and one output terminal of each of the plurality of selected circuit locations of the circuit representation, at least one predetermined model instance delay value representing a timing delay within a model instance of the circuit representation, and at least one predetermined media delay value representing a timing delay between terminals of different model instances of the circuit representation and includes for said at least two input terminals (312, 313; 322, 323) and said at least one output terminal of said at least one model instance (350, 354) at least two predetermined model instance delay values representing the time delays associated to the different input terminals and at least one predetermined media delay value representing a timing delay between terminals of different model instances of
the circuit representation the method comprising the steps of:
calculating, for a first one of the terminals of each selected circuit location, a forward timing delay according to each model instance and media delay value located between the first terminal and the main input terminal (310), wherein the forward timing delay represents a time required for a signal to travel between the main input terminal of the circuit representation and the first terminal; and carrying out a respective calculation also for said at least one model instance for each of its at least two input terminals,
assigning, for the main output terminal of the circuit representation, a budget timing delay value representing a maximum acceptable time delay for a signal travelling from the main input terminal to the main output terminal;
calculating, for the first terminal of each selected circuit location, a derived budget timing delay constant by substracting each model instance and media delay value between the first terminal and the main output terminal from the budget timing delay value circuit location; and carrying out a respective calculation also for said at least one model instance for each of its at least two input terminals,
calculating, for the first terminal of each selected circuit location, a timing debt by subtracting the derived budget timing delay constant of the first terminal from the forward timing delay of the first terminal and carrying out a respective calculation also for said at least one model instance for each of its at least two input terminals,
determining whether the circuit representation should be modified based on a value of at least one of the calculated timing debts, and
modifying the circuit representation stored in the memory in accordance with the value of at least one of the calculated timing debts when the determining step determines that the circuit representation should be modified.

2. The method of claim 1, wherein the first terminal of at least one of the selected circuit locations has, relative to various points in the circuit representation, a plurality of calculated forward timing delays, a plurality of derived budget timing delay constants, and a plurality of timing debts each calculated by subtracting one of the derived budget timing delay constants of the first terminal from a corresponding one of the forward timing delays of the first terminal, and wherein the method further comprises the step of selecting one of the timing debts of the first terminal as the timing debt to be used in determining whether the circuit representation should be modified.

3. The method of claim 1 or 2, further comprising the step of replacing at least one selected model instance of the circuit representation stored in the memory with a different model instance in response to the calculation of at least one of the timing debts.

4. The method of claim 2 or 3, wherein a plurality of timing data groups including at least one of said forward timing delays, said derived budget timing delay constants, and said timing debts is associated with at least one selected circuit location of the circuit representation,
the method further including the step of associating each of said plurality of timing groups with a circuit location interconnection path of the circuit representation.

5. The method of claim 4, wherein the circuit representation further comprises latch components, each having at least one of the input terminals and at least one of the output terminals.

6. The method according to at least one of the claims 2 to 5, wherein the circuit representation further comprises latch components each having at least one of the input terminals and at least one of the output terminals and wherein each latch component has a plurality of calculated forward timing delays, the method further comprising the step of selecting the longest forward timing delay for the latch component as the forward timing delay to be used in the calculation of the timing debt for at least one of the terminals of the latch component.

7. The method according to at least one of the claims 4 to 6, wherein each of the plurality of timing data groups associated with each selected circuit location further comprises time delay information for a clocked latch component.

8. The method according to at least one of the claims 1 to 7, wherein the interconnected circuit location can be traversed by said synthesis procedure in any direction.

## Patentansprüche

1. Verfahren zum Einbringen von Timing-Information in eine Schaltkreissyntheprozedur, die von einem Datenverarbeitungssystem mit einem Speicher ausgeführt wird, wobei die Prozedur eine Schaltkreisrepräsentation benutzt, welche in dem Speicher gespeichert ist, welche einen Haupteingangsanschluß (310), einen Hauptausgangsanschluß (325) und eine Vielzahl von miteinander verbundenen Schaltkreisplätzen, enthaltend eine Vielzahl von Modellbeispielen (model instances) (350-354), die zumindest einen Eingangsanschluß (312; 313: 315: 320: 322, 323; 317, 319) und zumindest einen Ausgangsanschluß (314, 316, 321, 318, 324), die mit diesen assoziiert sind, aufweist und zumindest ein Modellbeispiel (model instance) (350, 354) aufweist, welches zumindest zwei Eingangsanschlüsse (312, 313; 322, 323) und zumindest einen Ausgangsanschluß (314, 324) aufweist, wobei die Timing-Information in dem Speicher gespeichert ist, und für zumindest einen Eingangsanschluß und einen Ausgangsanschluß für jeden aus der Vielzahl von ausgewählten Schaltkreisplätzen der Schaltkreisrepräsentation zumindest einen vorbestimmten Modellbeispiel-Verzögerungswert enthält, welcher eine Timing-Verzögerung innerhalb des Modellbeispiels (model instance) der Schaltkreisrepräsentation repräsentiert, und zumindest einen vorgegebenen mittleren Verzögerungswert enthält, welcher die Timing-Verzögerung zwischen den Anschlüssen unterschiedlicher Modellbeispiele der Schaltkreisrepräsentation repräsentiert und weiterhin für zumindest zwei Eingangsanschlüsse (312, 313; 322, 323) und den zumindest einen Ausgangsanschluß des zumindest einen Modellbeispiels (350, 354) zumindest zwei vorgegebene Modellbeispiel-Verzögerungs- werte enthält, welche die Zeitverzögerungen repräsentieren, die mit den unterschiedlichen Eingangsanschlüssen assoziiert sind und zumindest einen vorgegebenen mittleren Verzögerungswert enthält, welcher eine Timing-Verzögerung zwischen den Anschlüssen unterschiedler Modellbeispiele (model instances) der Schaltkreisrepräsentation repräsentiert, wobei das Verfahren die folgenden Schritte aufweist:
Berechnen einer Vorwärtszeitverzögerung für einen ersten Anschluß eines ausgewählten Schaltkeisplatzes entsprechend jedem Modellbeispiel und eines mittleren Verzögerungswertes, welcher zwischen dem ersten Anschluß und dem Haupteingangsanschluß (310) angeordnet ist, wobei die Vorwärtszeitverzögerung die Zeit repräsentiert, die ein Signal benötigt, um zwischen dem Haupteingangsanschluß der Schaltkreisrepräsentation und des ersten Anschlusses fortzuschreiten; und Ausführen einer entsprechenden Berechnung auch für zumindest ein Modellbeispiel für jeden von zumindest zwei Eingangsanschlüssen,
Zuteilen eines Budget-Zeitverzögerungswertes für den Hauptausgangsanschluß der Schaltkreisrepräsentation, welcher Wert ein Maximum an akzeptierbarer Zeitverzögerung für ein Signal, welches von dem Haupteingangsanschluß an den Hauptausgangsanschluß fortschreitet, repräsentiert;
Berechnen einer erhaltenen Budget-Zeitverzögerungskonstante für den ersten Anschluß eines jeden ausgewählten Schaltkreisplatzes, in dem jedes Modellbeispiel und mittlerer Verzögerungswert zwischen dem ersten Anschluß und dem Hauptausgangsanschluß von dem Budget-Zeitverzögerungswert des Schaltkreisplatzes abgezogen wird; und Ausführen einer entsprechenden Berechnung auch für zumindest ein Modellbeispiel für jeden von seinen zumindest zwei Eingangsanschlüssen,
Berechnen einer Zeitschuld für jeden Anschluß des ausgewählten Schaltkreisplatzes, in dem die erhaltene Budget-Zeitverzögerungskonstante des ersten Anschlusses von der Vorwärtszeitverzögerung des ersten Anschlusses abgezogen wird und in dem eine entsprechende Berechnung auch für zumindest ein Modellbeispiel für jeden dessen zumindest zwei Eingangsanschlüssen ausgeführt wird,
Bestimmen, ob die Schaltkreisrepräsentation, basierend auf einem Wert von zumindest einer der berechneten Zeitschuld, modifiziert werden sollte, und
Modifizieren der Schaltkreisdarstellung, wie sie in dem Speicher gespeichert ist gemäß dem Wert von zumindest einer berechneten Zeitschulden, wenn in dem Bestimmungsschritt bestimmt wurde, daß die Schaltkreisrepräsentation modifiziert werden soll.

2. Verfahren nach Anspruch 1, bei dem der erste Anschluß von zumindest einem der ausgewählten Schaltkreisplätze relativ zu verschiedenen Punkten in der Schaltkreisrepräsentation eine Vielzahl von berechneten Vorwärtszeitverzögerungen, eine Vielzahl von erhaltenen Budget-Zeitverzögerungskonstanten und eine Vielzahl von Zeitschulden enthält, wobei jede davon dadurch berechnet wird, daß eine der behaltenen Budget-Zeitverzögerungskonstanten des ersten Anschlusses von einer entsprechenden Vorwärtszeitverzögerung des ersten Anschlusses abgezogen wird und wobei das Verfahren weiterhin den Schritt des Auswählens eines der Zeitschulden des ersten Anschlusses als die Zeitschuld aufweist, die zum Bestimmen verwendet wird, ob die Schaltkreisrepräsentation modifiziert werden sollte.

3. Verfahren nach Anspruch 1 oder 2, weiterhin enthaltend den Schritt des Ersetzens von zumindest einem ausgewählten Modellbeispiel der Schaltkreisrepräsentation, wie sie in dem Speicher gespeichert ist, durch ein unterschiedliches Modellbeispiel in Antwort auf die Berechnung von zumindest einer der Zeitschulden.

4. Verfahren nach Anspruch 2 oder 3, bei dem eine Vielzahl von Timing-Datengruppen enthaltend zumindest eine der Vorwärtszeitverzögerungen, einen der erhaltenen Budget-Zeitverzöge- rungskonstanten und der Zeitschulden mit zumindest einem ausgewählten Schaltkreisplatz der Schaltkreisrepräsentation assoziiert wird, und wobei das Verfahren weiterhin den Schritt des Assoziierens einer jeden aus der Vielzahl von Timing-Gruppen mit einem Schaltkreisplatzverbindungspfad der Schaltkreisrepräsentation aufweist.

5. Verfahren nach Anspruch 4, bei dem die Schaltkreisrepräsentation weiterin Latch-Komponenten aufweist, von denen jede zumindest einen der Eingangsanschlüsse und zumindest einen der Ausgangsanschlüsse aufweist.

6. Verfahren nach einem der Ansprüche 2 bis 5, bei dem die Schaltkreisrepräsentation weiterhin Latch-Komponenten aufweist, von denen jede zumindest einen der Eingangsanschlüsse und zumindest einen der Ausgangsanschlüsse aufweist und wobei jede Latch-Komponente eine Vielzahl von berechneten Vorwärtszeitverzögerungen aufweist und das Verfahren weiterhin den Schritt des Auswählens der längsten Vorwärtsverzögerungszeit für die Latch-Komponente als die Vorwärtsverzögerungszeit, die für die Berechnung der Zeitschuld für zumindest einen der Anschlüsse der Latch-Komponente verwendet wird, aufweist.

7. Verfahren nach einem der Ansprüche 4 bis 6, bei dem die Vielzahl von Timing-Datengruppen, die mit jedem ausgewählten Schaltkreisplatz assoziiert sind, weiterhin die Zeitverzögerungsinformation für eine getaktete Latch-Komponente enthält.

8. Verfahren nach einem der Ansprüche 1 bis 7, bei dem die verbundenen Schaltkreisplätze in jede beliebige Richtung durch die Syntheseprozedur durchlaufen werden können.

## Revendications

1. Procédé d'incorporation d'informations de synchronisation dans une procédure de synthèse de circuits exécutée par un système de traitement de données ayant une mémoire, la procédure utilisant une représentation de circuit, emmagasinée dans la mémoire, qui comprend une borne d'entrée principale (310), une borne de sortie principale (325) et une multiplicité d'emplacements de circuit interconnectés comprenant une multiplicité de cas modélisés (350 à 354) auxquels sont associées au moins une borne d'entrée (312; 313: 315: 320: 322, 323; 317, 319) et au moins une borne de sortie (314, 316, 321, 318, 324), et au moins un cas modélisé (350, 354) qui a au moins deux bornes d'entrée (312, 313; 322, 323) et au moins une borne de sortie (314, 324), dans lequel les informations de synchronisation sont emmagasinées dans la mémoire et comprennent, pour au moins une borne d'entrée et une borne de sortie de chaque emplacement de la multiplicité d'emplacements de circuit sélectionnés de la représentation de circuit, au moins une valeur de retard de cas modélisé prédéterminée représentant un retard se produisant dans un cas modélisé de la représentation de circuit, et au moins une valeur de retard de milieu prédéterminée représentant un retard se produisant entre des bornes de différents cas modélisés de la représentation de circuit, et comprennent, pour lesdites bornes d'entrée au nombre d'au moins deux (312, 313; 322, 323) et ladite borne de sortie au nombre d'au moins un dudit cas modélisé au nombre d'au moins un (350, 354) au moins deux valeurs de retard de cas modélisé prédéterminées représentant les retards associés aux différentes bornes d'entrée et au moins une valeur de retard de milieu prédéterminée représentant un retard se produisant entre des bornes de différents cas modélisés de la représentation de circuit, le procédé comportant les étapes consistant :
à calculer, pour une première borne de chaque emplacement de circuit sélectionné, un retard d'aller selon chaque valeur de retard de cas modélisé et de retard de milieu apparaissant entre la première borne et la borne d'entrée principale (310), le retard d'aller représentant un temps requis par un signal pour parcourir la distance séparant la borne d'entrée principale de la représentation de circuit et la première borne; et à effectuer un calcul respectif également pour ledit cas modélisé au nombre d'au moins un pour chacune de ses bornes d'entrée au nombre d'au moins deux,
à attribuer, pour la borne de sortie principale de la représentation de circuit, une valeur de retard prévu représentant un retard acceptable maximal pour un signal passant de la borne d'entrée principale à la borne de sortie principale;
à calculer, pour la première borne de chaque emplacement de circuit sélectionné, une constante de retard prévu dérivée en soustrayant de la valeur de retard prévu du circuit chaque valeur de retard de cas modélisé et de retard de milieu apparaissant entre la première borne et la borne de sortie principale; et à effectuer un calcul respectif également pour ledit cas modélisé au nombre d'au moins un pour chacune de ses bornes d'entrée au nombre d'au moins deux;
à calculer, pour la première borne de chaque emplacement de circuit sélectionné, une dette temporelle en soustrayant du retard d'aller de la première borne la constante de retard prévu dérivée de la première borne, et à effectuer un calcul respectif également pour ledit cas modélisé au nombre d'au moins un pour chacune de ses bornes d'entrée au nombre d'au moins deux;
à déterminer si la représentation de circuit devrait être modifiée sur la base d'une valeur d'au moins une des dettes temporelles calculées, et
à modifier la représentation de circuit emmagasinée dans la mémoire conformément à la valeur d'au moins une des dettes temporelles calculées lorsque l'étape de détermination détermine la nécessité de modifier la représentation de circuit.

2. Procédé selon la revendication 1, dans lequel la première borne d'au moins un des emplacements de circuit sélectionnés présente, par rapport à divers points de la représentation de circuit, une multiplicité de retards d'aller calculés, une multiplicité de constantes de retard prévu dérivées et une multiplicité de dettes temporelles, chaque valeur étant calculée en soustrayant d'un retard correspondant parmi les retards d'aller de la première borne l'une des constantes de retard prévu dérivées de la première borne, le procédé comportant en outre une étape consistant à sélectionner l'une des dettes temporelles de la première borne en tant que dette temporelle à utiliser pour déterminer si la représentation de circuit doit être modifiée.

3. Procédé selon la revendication 1 ou 2, comportant en outre une étape consistant à remplacer par un cas modélisé différent au moins un cas modélisé sélectionné de la représentation de circuit emmagasinée dans la mémoire en réponse au calcul d'au moins une des dettes temporelles.

4. Procédé selon la revendication 2 ou 3, dans lequel une multiplicité de groupes de données de synchronisation comprenant au moins un(e) desdits retards d'aller, desdites constantes de retard prévu dérivées et desdites dettes temporelles sont associés à au moins un emplacement de circuit sélectionné de la représentation de circuit,
le procédé comprenant en outre une étape consistant à associer chaque groupe de ladite multiplicité de groupes de données de synchronisation à un chemin d'interconnexion d'emplacements de circuit de la représentation de circuit.

5. Procédé selon la revendication 4, dans lequel la représentation de circuit comporte en outre des composants formant verrou, chacun ayant au moins une des bornes d'entrée et au moins une des bornes de sortie.

6. Procédé selon au moins l'une des revendications 2 à 5, dans lequel la représentation de circuit comporte en outre des composants formant verrou ayant chacun au moins l'une des bornes d'entrée et au moins l'une des bornes de sortie, et dans lequel chaque composant formant verrou a une multiplicité de retards d'aller calculés, le procédé comportant en outre une étape consistant à sélectionner le retard d'aller le plus long pour le composant formant verrou en tant que retard d'aller à utiliser dans le calcul de la dette temporelle pour au moins l'une des bornes du composant formant verrou.

7. Procédé selon au moins une des revendications 4 à 6, dans lequel chaque groupe de la multiplicité de groupes de données de synchronisation associés à chaque emplacement de circuit sélectionné comporte en outre des informations de retard pour un composant formant verrou piloté par signal d'horloge.

8. Procédé selon au moins une des revendications 1 à 7, dans lequel les emplacements de circuit interconnectés peuvent être traversés par ladite procédure de synthèse dans n'importe quelle direction.
